(19) Europäisches Patentamt / European Patent Office / Office européen des brevets

(11) **EP 1 930 502 B1**

(12) **EUROPEAN PATENT SPECIFICATION**

(45) Date of publication and mention
of the grant of the patent:
**19.10.2016 Bulletin 2016/42**

(51) Int Cl.:
*E01C 7/26* (2006.01)  *E01C 7/34* (2006.01)
*E01C 7/35* (2006.01)  *E01C 11/24* (2006.01)
*C08L 95/00* (2006.01)  *E01C 7/30* (2006.01)

(21) Application number: **06782908.5**

(22) Date of filing: **23.08.2006**

(86) International application number:
**PCT/JP2006/316455**

(87) International publication number:
**WO 2007/023833 (01.03.2007 Gazette 2007/09)**

(54) **PAVING MATERIAL AND METHOD FOR CONSTRUCTION OF PAVED BODY USING THE SAME**

PFLASTERMATERIAL UND VERFAHREN FÜR DIE KONSTRUKTION VON PFLASTERUNG UNTER VERWENDUNG DES PFLASTERMATERIALS

MATERIAU DE REVETEMENT ROUTIER ET PROCEDE DE FABRICATION D UN CORPS REVETU AU MOYEN DUDIT MATERIAU

(84) Designated Contracting States:
**DE FR GB**

(30) Priority: **24.08.2005 JP 2005243454**
**02.03.2006 JP 2006057006**

(43) Date of publication of application:
**11.06.2008 Bulletin 2008/24**

(73) Proprietors:
• **Nichireki Co., Ltd**
**Chiyoda-ku**
**Tokyo**
**102-8222 (JP)**
• **Nishireki Co., Ltd.**
**Tokyo 102-8222 (JP)**

(72) Inventors:
• **SASADA, Yoshihito**
**Osaka-shi, Osaka 532-0011 (JP)**
• **HAGIWARA, Akito**
**Osaka-shi, Osaka 532-0011 (JP)**
• **FUJII, Masahiko**
**Osaka-shi, Osaka 532-0011 (JP)**
• **TAKEUCHI, Kazuma**
**Shimotsuke-shi, Tochigi 329-0412 (JP)**
• **UENO, Sadaharu**
**Shimotsuke-shi, Tochigi 329-0412 (JP)**
• **KANAZAWA, Takashi**
**Shimotsuke-shi, Tochigi 329-0412 (JP)**
• **IKEDA, Tada-aki**
**Shimotsuke-shi, Tochigi 329-0412 (JP)**

(74) Representative: **Daniels, Jeffrey Nicholas**
**Page White & Farrer**
**Bedford House**
**John Street**
**London WC1N 2BF (GB)**

(56) References cited:
EP-A2- 0 231 477       JP-A- 06 256 468
JP-A- 11 256 507       JP-A- 11 323 140
JP-A- 2001 131 388     JP-A- 2001 336 107
US-A- 4 957 560        US-B1- 6 559 206

**Description**

Field of the Invention

The present invention relates to a process for producing a paving material and to a method for construction of paved body. Described is a novel paving material which is easy to be handled, less restrictive on using, and superior in characteristics, and a method for construction of paved body using the paving material.

Background of the Invention

Recently, there is a tendency to employ drainage pavement aiming at ensuring good eyesight on rainy days and suppressing noise. However, drainage pavement has relatively large percentage of air void and relatively smaller binding area between aggregates than usual pavement. Drainage pavement, therefore, is easy to lose its aggregates in particular in surface course when supplied for traffic use, and sometimes requires repair early. To prevent this, in conventional method, methacrylate resin, acrylate resin, etc. is applied on the surface of drainage pavement to strengthening the surface of drainage pavement (see the patent documents 1 and 2, for examples).

However, since resins in liquid form, such as methacrylate resin and acrylate resin, are classified into the first petroleum group of the fourth class, and hardeners thereof in powder form are classified into the fifth class dangerous materials (auto-reactive), resins have disadvantages that they have to be handled carefully and are not easy to be handled. Further, resins in liquid form, such as methacrylate resin and acrylate resin, cannot be used on a surface having high temperature or moisture. Accordingly, resins in liquid form have restrictions that they cannot be applied, for example, on a paved body just constructed and possessing high temperature, on a paved body still wearing moisture on its surface due to rain or water spray for preventing mixed materials from sticking to a roller of compacting equipment, or for accelerating temperature decrease of a paved body because of short time left before opening the paved body for traffic use. In addition, resins in liquid form, such as methacrylate resin and acrylate resin, have disadvantages that they have irritant smell and therefore cares for the workers who use them and for neighbors are indispensable.

On the other hand, while a binder emulsion for pavement, such as conventional asphalt emulsion, can be raised as a paving material in place of resins, a binder emulsion for pavement such as an asphalt emulsion usually has not enough binding strength and hardness after its decomposition and never gives satisfying results even when the surface of drainage pavement is strengthen with a binder emulsion for pavement. In view of this, some trials have been made to improve durability or water-resistance of a binder emulsion for pavement. For example, there is a proposal to mix epoxy resin and hardener thereof into asphalt emulsion (see the patent documents 3 and 4). However, conventional resin mixed binder emulsions for pavement, such as resin mixed asphalt emulsions, have disadvantages that the decomposition of binder emulsions for pavement is so slow that it takes long time before opening the paved body for traffic use after it is constructed. In addition, the durability, etc. obtained by conventional resin mixed binder emulsions for pavement do not attain to satisfying level.

Patent Document 1: Japanese Patent No.2913904 B
Patent Document 2: Japanese Patent No.3246460 B
Patent Document 3: Japanese Patent Kokai No.11-323140 A
Patent Document 4: Japanese Patent Kokai No.2001-131388 A

The present invention was made to resolve the above mentioned disadvantages in conventional technique and the purposes of the present invention is to provide a method for construction of paved body using a paving material which is easy to be handled, less restrictive on using, fast in decomposition, and superior in durability.

Disclosure of the Invention

After having made various researches to resolve the disadvantages above mentioned, the present inventors have found that a conventional resin mixed binder emulsion for pavement decomposes slowly and gives insufficient strength because a water-soluble epoxy resin or an emulsified epoxy resin is used in consideration of mixing ability of a resin with a binder emulsion for pavement. Based on the findings, the present inventors continued researches to find out that a paving material is obtained by using a non-water-soluble epoxy resin and a hardener thereof, and by mixing them at the time the work is executed at the scene of the execution of work. Thus obtained paving material unexpectedly has no problem of mixing a resin with a binder emulsion for pavement such as asphalt emulsion even though a non-water-soluble epoxy resin is used, and reveals fast decomposition and sufficient strength.

The present inventors have further found that, when an amine compound(s) comprising at least polyaminoamido is used as an amine compound(s) which is hardener, an amine compound mixed binder emulsion for pavement, such as asphalt emulsion, can be preserved for a period long enough for actual use without decomposition. The present inventors have further found that the execution of work becomes very simple and efficiency of the execution of work increases by using such amine compound mixed binder emulsion for pavement, because a paving material of the present disclosure can be prepared basically just by mixing a binder emulsion for pavement comprising an amine compound(s) with a non-water-soluble epoxy resin at the scene of the execution of work.

In one aspect, the present invention provides a process according to claim 1. In another aspect, the present invention provides a method according to claim 6. Described herein is a paving material and a method for construction of paved body using the same, said paving material comprises as ingredients at least a binder emulsion for pavement, a non-water-soluble epoxy resin, and an amine compound(s) which is a hardener thereof, and is prepared by mixing the three ingredients at the scene of the execution of work at the time the work is executed. Furthermore, the present disclosure provides a binder emulsion for pavement which comprises an amine compound(s) as a hardener of a non-water-soluble epoxy resin, and said amine compound(s) comprises at least polyaminoamido.

In a paving material according to the present disclosure, a non-water-soluble epoxy resin is used, and the three ingredients which are a binder emulsion for pavement, a non-water-soluble epoxy resin, and a hardener thereof are mixed on execution of work at the scene of the execution of work. Being mixed on execution of work at the scene of the execution of work means said three ingredients are not in a state of being mixed when the execution of work starts, and are in a state of being mixed when they are sprayed or applied on a construction surface after having the execution of work started. This means that, for a paving material of the present disclosure, the time period from being mixed to being used for the execution of work is very short. In most extreme case, the three ingredients are in a state of being unmixed each other at the time the execution of work starts, then sprayed or applied, and are mixed at the first time on a construction surface. In another case, the three ingredients are sprayed and then mixed on a way to reach the construction surface after having been spouted out from nozzles of sprayer. In further another case, the three ingredients are mixed in a tank of a sprayer and then spouted out from the nozzles of the sprayer towards the construction surface. Furthermore, the three ingredients may be mixed in a suitable container at the scene of execution of work, and then sprayed with a sprayer or applied.

On mixing the three ingredients, i.e. a binder emulsion for pavement, a non-water-soluble epoxy resin, and an amine compound(s) as a hardener, the three ingredients can be mixed at the same time, or two of the three may be mixed first and then the mixture thus obtained be mixed with the remaining one ingredient. While there is no restriction in the order of the mixing, it is preferable to mix a binder emulsion for pavement with an amine compound(s) first and then to mix the thus obtained mixture with a non-water-soluble epoxy resin, when two of the three ingredients are mixed first. In particular, when an amine compound(s) comprising at least polyaminoamido is used as an amine compound(s) and is mixed with a binder emulsion, the resultant mixture is stable for a period long enough for actual use without decomposition. A binder emulsion containing an amine compound(s) can be prepared, for example, in a plant and then transported to a scene of the execution of work, and mixed with a non-water-soluble epoxy resin on the scene of the execution of work.

Anyway, in a paving material of the present disclosure, a period in which good mixing state is maintained among the three ingredients can be very short, because a non-water-soluble epoxy resin, a binder emulsion for pavement and a hardener are mixed at the time the work is executed at the scene of the execution of work. Due to this feature, it is not necessary for a paving material of the present disclosure to employ any measures, such as emulsification of epoxy resin, to keep the three ingredients stable in mixed state.

In the present description, construction surface means any surfaces on which a paving material is sprayed, applied, or spread out, and comprises a surface of pavement under construction, a surface of pavement or deck exposed by excavation or cutting, as well as a surface of various paved body newly or already constructed including drainage pavement.

A paving material of the present disclosure, since it is composed as mentioned above, has advantages that it decomposes and hardens fast after used, that it is able to be opened for traffic use earlier, that it reveals strong binding force, and shows superior wearing resistance and durability. Further, since a paving material of the present disclosure comprises a binder emulsion for pavement such as asphalt emulsion in addition to epoxy resin, it can be used on a construction surface even if the temperature of the surface is still high, and even if moisture remain on the surface. Due to this, a paving material of the present disclosure has the advantages that it can be used on a surface of paved body just constructed and having high temperature, and therefore is superior in efficiency of execution of work, and that it can be used even if a surface of paved body has moisture. In addition, a paving material of the present disclosure has the advantages that it is easy to be handled, is safe on execution of work, has little irritant smell, and assures comfortable working circumstances.

In a paving material of the present disclosure, when a binder emulsion for pavement and an amine compound(s) which is a hardener are mixed beforehand in a plant, there are advantages that weighing operations for mixing the ingredients at the scene of execution of work as well as the equipment and machines needed for mixing and spraying can be so simplified that the execution of work become very easy. In particular, when polyaminoamido or an amine compound(s) comprising at least polyaminoamido is used and mixed with a binder emulsion for pavement beforehand, a binder emulsion for pavement obtained by mixing a hardener is stable for a period long enough for actual use without decomposition and is very useful for simplifying the process for execution of work and for increasing efficiency of the execution of work.

In addition, according to a method for construction of pave body of the present disclosure, which comprises a step of spraying or applying a paving material of the present invention and a step of forming paved layer comprising binder for pavement and hardened epoxy resin by progressing decomposition of binder emulsion and hardening of epoxy resin on a construction surface, the following advantages are obtained that a paved body comprising a paved layer having superior strength and durability can be constructed in safe, simply, and without restrictions on the conditions such as the temperature of a construction surface and the moisture remainder on a construction surface.

<u>Best Mode for Carrying out the Invention</u>

A paving material of the present disclosure comprises as ingredients at least a binder emulsion for pavement, a non-water-soluble epoxy resin, and an amine compound(s) as a hardener of said non-water-soluble epoxy resin. These ingredients are explained below.

A. a binder emulsion for pavement:

A binder emulsion for pavement used in the present disclosure is a binder emulsion for pavement such as asphalt emulsion or petroleum resin type binder emulsion, which is obtained by emulsifying a bituminous binder, such as asphalt, or petroleum resin type binder.

<Asphalt emulsion>

Asphalt emulsion is explained first. As bituminous type binder materials which can be used in asphalt emulsion, the following materials can be mentioned; petroleum asphalt such as straight asphalt, blown asphalt, partially-blown asphalt, and asphalt by propane deaspharuting process, or natural asphalt such as lake asphalt. One kind of these bituminous type binder materials may be used alone, or two or more kinds of them may be used in combination in asphalt emulsion.

Asphalt emulsion as mentioned above is preferably modified with plasticizers, adhesion imparting agents, thermoplastic resins, and/or rubbers. Plasticizers usable for modification include aliphatic oil, aromatic oil, alicyclic oil, cylinder oil. One kind of these plasticizers may be used alone, or two or more kinds of them may be used in combination.

Adhesion imparting agents usable for modification of asphalt emulsion include aliphatic petroleum resin, aromatic petroleum resin, alicyclic petroleum resin, hydrogenated petroleum resin, rosin type petroleum resin, terpene type petroleum resin, styrene type resin, isoprene type resin, coumarone-indene resin. One kind of these adhesion imparting agents can be used alone, or two or more kinds of them may be used in combination.

Thermoplastic resins usable for modification of asphalt emulsion include styrene type resin such as styrene butadiene block-copolymer (SBS), styrene isoprene block-copolymer (SIS), ethylene type resin such as ethylene acrylic acid copolymer (EAA), ethylene vinyl acetate copolymer (EVA), ethylene ethylacrylate copolymer (EEA), polyester type resin, nylon type resin, acryl type resin. One kind of these thermoplastic resins may be used alone, or two or more kinds of them may be used in combination. Thermoplastic resins may be partially emulsified or partially in a form of latex when mixed in an asphalt emulsion used in the present invention.

Rubbers usable for modification of asphalt emulsion include natural rubber, gutta-percha, cyclized rubber, styrene butadiene rubber, styrene isoprene rubber, polyisoprene rubber, butadiene rubber, chloroprene rubber, butyl rubber, halogenated butyl rubber, chlorine type polystyrene, chlorosulfonic polystyrene, ethylene-propylene rubber, EPT rubber, alfine rubber, styrene butadiene block-polymer, styrene isoprene block-polymer rubber. One kind of these rubbers may be used alone, or two or more kinds of them may be used in combination. Rubbers may be partially emulsified or partially in a form of latex when mixed in an asphalt emulsion used in the present invention.

There are no restrictions in the amounts of the each material mentioned above that are used to modify an asphalt emulsion as long as a modified asphalt emulsion having desired properties is obtained. Nevertheless, as to thermoplastic resins and rubbers for example, thermoplastic resins and/or rubbers are preferably used in an amount of 3 to 20 parts by weight, more preferably 3 to 10 parts by weight, in total amounts of thermoplastic resins and rubbers when they are used together, or in an amount of thermoplastic resins or rubbers when thermoplastic resins or rubbers are used alone, against 100 parts by weight of bituminous materials. When an amount of thermoplastic resins and/or rubbers exceeds 20 parts by weight, viscosity of the modified asphalt obtained becomes too high to be emulsified easily, which is not preferable. On the other hand, when an amount of thermoplastic resins and/or rubbers is less than 3 parts by weight, the effect obtained by modification is not enough.

<Petroleum resin type binder emulsion>

Petroleum resin type binder, which is emulsified into petroleum resin type binder emulsion, is a mixture of thermoplastic resin, rubber, adhesion imparting agents, and plasticizer, and further anti-stripping agents and/or adhesion suppressing agents are also mixed in need thereof.

Thermoplastic resins usable in petroleum resin type binder include styrene type resins such as styrene butadiene block-copolymer (SBS), styrene isoprene block-copolymer (SIS), and hydrogenated styrene type resins thereof, ethylene type resin such as ethylene acrylic acid copolymer (EAA), ethylene vinyl acetate copolymer (EVA), ethylene ethylacrylate copolymer (EEA), polyester type resin, nylon type resin, acryl type resin. One kind of these thermoplastic resins may be used alone, or two or more kinds of them may be used in combination. Thermoplastic resins may be partially emulsified or partially in a form of latex when mixed in an petroleum resin type binder emulsion used in the present invention.

Rubbers usable in petroleum resin type binder include natural rubber, gutta-percha, cyclized rubber, styrene butadiene rubber, styrene isoprene rubber, polyisoprene rubber, butadiene rubber, chloroprene rubber, butyl rubber, halogenated butyl rubber, chlorine type polystyrene, chlorosulfonic polystyrene, ethylene-propylene rubber, EPT rubber, alfine rubber, styrene butadiene block-polymer, styrene isoprene block-polymer rubber. One kind of these rubbers may be used alone, or two or more kinds of them may be used in combination. Rubbers may be partially emulsified or partially in a form of latex when mixed in a petroleum resin type binder used in the present invention.

Adhesion imparting agents usable in petroleum resin type binder include aliphatic petroleum resin, aromatic petroleum resin, alicyclic petroleum resin, hydrogenated petroleum resin, rosin type petroleum resin, terpene type petroleum resin, styrene type resin, isoprene type resin, coumarone-indene resin. One kind of these adhesion imparting agents can be used alone, or two or more kinds of them may be used in combination.

Plasticizers usable in petroleum resin type binder include aliphatic oil, aromatic oil, alicyclic oil, cylinder oil. One kind of these plasticizers may be used alone, or two or more kinds of them may be used in combination.

Anti-stripping agents usable in petroleum resin type binder include surface active agent such as amine type one, amide type one, quaternary ammonium salt, and phosphoric ester. One kind of these anti-stripping agents may be used alone, or two or more kinds of them may be used in combination.

Adhesion suppressing agents usable in petroleum resin type binder include paraffin wax, microcrystalline wax, Fischer-Tropsch wax, polyethylene wax, polypropylene wax. One kind of these adhesion suppressing agents may be used alone, or two or more kinds of them may be used in combination.

There are no restrictions in the amounts of the each material mentioned above that are used in a petroleum resin type binder as long as a petroleum resin type binder having desired properties is obtained. However, in 100 parts by weight of thermoplastic resin, rubber, adhesion imparting agents and plasticizer in total, 1 to 30 parts by weight of thermoplastic resin and rubber in total, 30 to 94 parts by weight of adhesion imparting agents, and 5 to 65 parts by weight of plasticizer are preferably comprised, and more preferably 5 to 15 parts by weight of thermoplastic resin and rubber in total, 55 to 80 parts by weight of adhesion imparting agents, and 10 to 40 parts by weight of plasticizer are comprised. When a total amount of thermoplastic resins and rubbers exceeds 30 parts by weight, viscosity of the petroleum resin type binder becomes too high to be emulsified easily, which is not preferable. On the other hand, when a total amount of thermoplastic resins and rubbers is less than 1 part by weight, strength and adhesive force of a petroleum resin type binder may become insufficient.

<Emulsification>

Asphalt emulsion (modified asphalt emulsion is included) used in the present invention is obtained by emulsifying with emulsifier the above mentioned bituminous materials or those modified with modifying agents above mentioned, or the above mentioned petroleum resin type binders. Any of anionic surface active agents, cationic surface active agents, nonionic surface active agents, or amphoteric surface active agents can be used as an emulsifier in emulsification. One kind of these surface active agents may be used alone, or two or more kinds of them may be used in combination.

Anionic surface active agents usable include fatty acid salt, alkyl sulfate ester salt, alkylbenzenesulfonic acid salt, alkylnaphthalenesulfonic acid salt, rhodinic acid salt.

Cationic surface active agents usable include long-chain aliphatic or alicyclic mono-amine, di-amine, tri-amine, amideamine, polyaminoethylimidazoline, long-chain hydroxyalkyldiamine, rosin amine, ethylene oxide adducts of these amines, amine type surface active agents such as amine oxide, aqueous solution of said surface active agents or water dispersing salt thereof treated with acid such as hydrochloric acid, sulfamic acid, acetic acid, and quaternary ammonium salt of said amine type surface active agents.

Nonionic surface active agents usable include polyoxyethylenealkylether, polyoxyethylenealkylphenylether, sorbitan fatty acid ester, polyoxyethylene sorbitan fatty acid ester, polyethylene glycol fatty acid ester, and polyoxyethylene alkylamine.

Amphoteric surface active agents usable include amino acid type or betaine type carboxylate, sulfate ester, and phosphate ester.

Binder emulsion for pavement used in the present invention can be prepared with above mentioned bituminous materials, modifying agents, petroleum resin type binders and emulsifiers. For example, binder emulsion for pavement can be prepared by preparing emulsifying liquid at a temperature of about 50°C by dissolving emulsifier and stabilizer into warm water, and passing thus obtained emulsifying liquid and asphalt, modified asphalt or petroleum resin type binder melted by heating through homogenizer such as colloid mill or Hareru-homogenizer at the same time to mix and emulsify them. Emulsifier is preferably used in an amount of 0.05 to 8 parts by weight against 100 parts of asphalt, modified asphalt, or petroleum resin type binder. Stabilizer is used to accelerate emulsification or to stabilize emulsifier. As stabilizer, for example, gelatin, PVA, sodium alginate, starch, carboxymethyl cellulose, or calcium chloride can be used.

At emulsification, an adequate amount of surface active agent may be added to heated and melted asphalt, modified asphalt, or petroleum resin type binder to accelerate emulsification. Suitable antifoamer or dispersing agent may be also added. Further, thermoplastic resin and/or rubber can be added in asphalt emulsion (modified asphalt emulsion is included) or petroleum resin type binder thus obtained. While there are no restrictions as to concentration of residue by evaporation (solid content) contained in thus obtained binder emulsion for pavement, the concentration of residue by evaporation is preferably in the range of 30 to 80 wt%, more preferably in the range of 50 to 70 wt%.

B. non-water soluble epoxy resin

Non-water soluble epoxy resin usable in the present disclosure is an epoxy resin which is non water-soluble and has two or more epoxy group in one molecule, or a mixture of a non water-soluble epoxy resin having two or more epoxy groups in one molecule and a non water-soluble epoxy resin having less than two epoxy group in one molecule. For example, glycidyl ether of bisphenol A type, bisphenol F type, or, novolak type, etc.; glycidyl ester of dimer acid type or tertiary carboxylic acid type; glycidyl amine of aromatic amine type, or aminophenol type are used as epoxy resin. One kind of these epoxy resins may be used alone, or two or more of them may be used in combination. In the process according to claim 1, di-glycidyl ether of bisphenol A type, di-glycidyl ether of bisphenol F type, or mixture thereof are used.

Emulsifiers above mentioned can be added in non-water soluble epoxy resin used in the present invention to increase mixing ability of the non-water soluble resin with binder emulsion for pavement. Nonionic surface active agents are preferable as emulsifier added. Further, an acryl compound selected from the group consisting of acrylic acid and ester thereof, methacrylic acid and ester thereof, and acrylonitrile can be added in a non-water soluble epoxy resin used in the present invention to increase the strength obtained after the resin hardened. In the case, an acryl compound is added in epoxy resin in an amount of 1 to 200 parts by weight, preferably 5 to 50 parts by weight against 100 parts by weight of epoxy resin.

C. amine compounds

Basically any type of an amine compound(s) can be used in the present disclosure as a hardener of non-water soluble epoxy resin as long as it is able to react with non-water soluble epoxy resin used and harden the epoxy resin. However, polyaminoamido, a mixture of polyaminoamido and polyamine, a mixture of polyaminoamido and modified polyamine other than polyaminoamido, or a mixture of polyaminoamido and polyamine and modified polyamine other than polyaminoamido is preferably used. More preferably, polyaminoamido or a mixture of polyaminoamido and modified aliphatic polyamine is used. In the process according to claim 1, polyaminoamido is used.

Polyamine used in combination with polyaminoamido is one or a mixture of two or more selected from the group consisting of aliphatic polyamine, alicyclic polyamine, aromatic polyamine, polyoxypropylene mono-amine, polyoxypropylene di-amine, polyoxypropylene tri-amine, polycyclohexyl polyamine mixture, and N-aminoethylpiperazine. Modified polyamine such as modified polyamine of epoxy adduct, or Mannich modified polyamine is used as modified polyamine other than polyaminoamido. Aliphatic modified polyamine is preferably used. One kind of these polyamines can be used alone, or two or more of them can be used in combination.

It is preferable to add water into the above mentioned an amine compound(s) as a hardener to form an aqueous solution thereof with concentration of 30 to 80 wt% so that the mixing ability of the amine compound(s) with binder emulsion for pavement increases. At this time, adequate amount of acetic acid can be added to increase water solubility of an amine compound(s).

A catalyst can be added into the above mentioned amine compound(s) as a hardener when needed. Any catalyst which is conventionally used as a reaction accelerator of a hardener can be used. For example, tertiary amine compounds such as p-toluenesulfonic acid, benzyl methyl amine, or 2, 4, 6-tris dimethyl aminometylphenol, or imidazole such as 2-methylimidazole are used as catalyst

There are no restriction as to the ratio of amounts of the three ingredients above mentioned, i.e. a binder emulsion for pavement, a non-water soluble epoxy resin, and an amine compound(s), as long as the paving material shows fast decomposition, desired strength and durability after hardened. However, usually a non-water soluble epoxy resin is preferably used in an amount of 10 to 70 parts by weight against 100 parts by weight of solid content in an asphalt emulsion, more preferably 15 to 50 parts by weight when a binder emulsion for pavement is an asphalt emulsion, and 10 to 100 parts by weight, more preferably 25 to 85 parts by weight against 100 parts by weight of solid part in a petroleum resin type binder emulsion when a binder emulsion for pavement is a petroleum resin type binder emulsion. Further, the ratio of amount between a non-water soluble epoxy resin and an amine compound(s) a hardener thereof is not specifically restricted as long as the paving material shows fast decomposition, desired strength and durability after hardened. However, usually active hydrogen equivalent of an amine compound(s) is preferably in the range of 01. to 2.0, more preferably in the range of 0.5 to 1.5 against one epoxy equivalent of a non-water soluble epoxy resin.

D. other ingredients

The paving material of the present disclosure may further comprise other ingredients, for example, cement, pigment, heat-screening pigment, or hollow particles, in addition to those above mentioned.

As cement to be added, normal Portland cement, high early strength Portland cement, super high early strength Portland cement, moderate heat Portland cement, white Portland cement, blast furnace slag cement, silica cement, flyash cement, alumina cement, expansive cement, sulfuric acid-proof cement, Jet cement, very rapid setting cement, blast furnace colloid cement, colloid cement, or super fine particle cement is usable. One kind of these cements can be used alone, or two or more of them can be used in combination.

Cement can be added into a binder emulsion for pavement or a non-water soluble epoxy resin. When cement is added into a non-water soluble epoxy resin, adequate amount of dispersing agent such as surface active agents or water reducing agents can be added. Cement is added in an amount of 1 to 20 parts by weight, preferably 2 to 10 parts by weight against 100 parts by weight of solid content in a binder emulsion for pavement. When cement is added, the paving material of the present disclosure decomposes and hardens earlier, and the strength and durability after decomposition and hardening of the paving material of the present disclosure are improved.

The paving material of the present disclosure can be colored in desired color when needed by adding appropriate pigments. Any pigments can be used. For example, titanium oxide, carbon black, zinc oxide, white lead, graphite, cadmium red, molybdenum orange, ferric hydroxide, iron oxide yellow, chrome yellow, chromium oxide, chromium green, ultramarine, Prussian blue, cobalt blue, or manganese violet is usable. One kind of these pigments can be used alone, or two or more of them can be used in combination.

Further, heat-screening pigments and hollow particles can be added when needed in the paving material of the present disclosure. Any of heat-screening pigments conventionally used for pavement can be used. Heat-screening pigments having sun reflection rate of 10% or more, and L* value in CIE1976L*a*b* color space of 80 or less is preferably used. When a heat-screening pigment is added into the paving material of the present disclosure, surface treatment layer, for example, constructed by using the paving material of the present disclosure well screens radiation heat from the sun, and is very effective, in particular, in suppressing heat island phenomenon in summer. As hollow particles, ceramic balloon, glass balloon, SHIRASU (volcanic ash piled up in southern part of KYUSHU island of Japan) balloon, or balloon made of resin such as polystyrene, having a diameter of 10 to 125 micron m, preferably of 25 to 80 micron m can be used. When hollow particles are added into the paving material of the present disclosure, heat-screening effect of a pavement layer formed with the paving material further increases due to high thermal insulation effect, reflection ability and radiation ability of hollow particles.

E. method for construction of paved body

A method for construction of paved body using above mentioned paving material will be explained below taking the case of constructing a surface hardened layer of drainage pavement as an example.

To construct a surface hardened layer on newly constructed drainage pavement, drainage pavement is first constructed with usual method and then paving material of the present disclosure is sprayed or applied on the surface of drainage pavement. To construct a surface hardened layer on previously constructed drainage pavement, the surface of the drainage pavement is first well cleaned and then after paving material of the present disclosure is sprayed or applied on the surface of drainage pavement. Before the paving material is sprayed, a binder emulsion for pavement, a non-water soluble epoxy resin, amine compounds as a hardener thereof, and other additional ingredients are first prepared, and then they are thrown into a mixer at the scene of the execution of work and mixed to produce a paving material of the present disclosure. There is no special order for the ingredients in being thrown into a mixer and in being mixed in a mixer. Three ingredients, i.e. a binder emulsion for pavement, a non-water soluble epoxy resin, and an amine compound(s), and other additional ingredients such as cement may be thrown into a mixer and then mixed at the same time. Other additional ingredients such as cement may be mixed in a mixer with a binder emulsion for pavement or a non-water soluble epoxy resin first, and then thus obtained mixture may be thrown into another mixer for final mix.

Next, the paving material of the present disclosure thus prepared at the time when the work is executed at the scene of the execution of work is quickly sprayed or applied on a surface of drainage pavement, which is a construction surface. Conventional sprayers such as engine sprayer, or conventional application tools such as roller can be used to spray or apply the paving material. The paving material of the present disclosure, while it depends on a composition of the paving material and percentage of air void of the drainage pavement, is preferably sprayed or applied in an amount of 0.2 to 1.0 liter/m$^2$ in one layer or two or more layers.

In another case, a binder emulsion and an amine compound(s) are mixed in a prescribed ratio in a plant, for example, before the execution of work to form a binder emulsion containing a hardener, and then thus obtained binder emulsion containing a hardener is mixed with a non-water soluble epoxy resin on the execution of work at the scene of the execution of work to prepare a paving material of the present disclosure. When a binder emulsion containing a hardener is prepared beforehand by mixing a binder emulsion and an amine compound(s) in a prescribed ratio, said binder emulsion containing a hardener may be mixed with a non-water soluble epoxy resin prepared separately in a mixer at the scene of the execution of work to prepare a paving material of the present disclosure. Or, said binder emulsion containing a hardener and a non-water soluble epoxy resin can be set in a spraying apparatus of two liquids measuring and mixing type, and then mixed in the sprayer to form a paving material of the present disclosure. A paving material of the present disclosure thus produced in the sprayer is immediately sprayed from the sprayer on the execution surface.

When a binder emulsion containing a hardener is beforehand prepared, mixing work at the scene of the execution of work becomes easy. This is advantageous. In addition, measuring work at the scene of the execution of work becomes simple, because there is no need to measure and mix a binder emulsion and an amine compound(s) as a hardener thereof at the scene of the execution of work. This is also advantageous. In this case too, additional ingredients such as cement can be mixed in a binder emulsion containing a hardener or a non-water soluble epoxy resin beforehand or at the scene of the execution of work.

While type of a binder emulsion and an amine compound as a hardener may affect to some extent, a mixture of a binder emulsion and polyaminoamido, or a mixture of a binder emulsion and amine compounds comprising at least polyaminoamido is unexpectedly superior in stability, and in the case of most preferable combination, said mixture does not decompose at 20 °C, for example, for one month or more and is able to be preserved for long time. Accordingly, when a binder emulsion containing a hardener is beforehand prepared in a plant by mixing a binder emulsion and an amine compound(s) comprising at least polyaminoamido in a prescribed ratio, said binder emulsion containing a hardener can be forwarded from a plant or a warehouse in need thereof to the scene of the execution of work in combination with a non-water soluble epoxy resin to prepare a paving material of the present disclosure. In view of this, a binder emulsion containing a hardener is very useful as a material for producing a paving material of the present disclosure. In amine compounds comprising at least polyaminoamido, polyaminoamido content is preferably 50 wt% or more, more preferably 60 wt% or more.

When a spraying apparatus of three liquids measuring and mixing type is available, three of a binder emulsion, a non-water soluble epoxy resin and an amine compound(s) can be set in the sprayer and then mixed in the sprayer to form a paving material of the present disclosure. A paving material of the present disclosure thus produced in the sprayer is immediately sprayed from the sprayer on the execution surface.

In accordance with the procedures as mentioned above, a drainage pavement having a paved layer comprising a binder for pavement such as asphalt or petroleum resin type binder and hardened epoxy resin can be constructed by preparing a paving material of the present disclosure on the execution of work at the scene of the execution of work, and then forming a layer of a paving material of the present disclosure on the surface of drainage pavement as the execution surface to decompose and harden. A paved layer constructed with a paving material of the present disclosure and comprising a binder for pavement and hardened epoxy resin is superior in strength and wearing resistance, and is very suitable for a surface strengthen layer of a drainage pavement, and, in addition, is able to increase noise suppressing effect of a drainage pavement. Furthermore, since a paving material of the present disclosure does not comprise acrylate resin or methacrylate resin, it is safe and generates irritant smell very little. Furthermore, a paving material of the present disclosure decomposes and hardens fast and is able to be opened for traffic use quickly. In addition, a paving material of the present disclosure is very advantageous because it can be used even if a surface of a drainage pavement is still at high temperature, or even if some moisture remain on the surface due to rain or water spray.

A pave body which can be constructed using a paving material of the present disclosure is not restricted to those above mentioned. Surface treatment layers can be constructed by repeating a step of spraying or applying a paving material of the present disclosure, or a step of distributing aggregates, whichever first, on a surface of previously or newly constructed paved body, one or more times, with the same or different number of times. Furthermore, when a paving material of the present disclosure is sprayed or applied on a surface with developed cracks and an overlay is carried out thereon, a layer constructed with a paving material of the present disclosure acts as a stress releasing layer (SAMI layer) to prevent reflection crack as well as water cutting layer. When a paving material of the present disclosure is sprayed or applied on floor slab to construct a paved layer, the paved layer thus constructed acts as a water proofing layer effective in water proof for bridge deck. In addition, a paving material of the present disclosure can be used as a cold mixture by being mixed with aggregates.

The present invention will be explained more in detail below referring to experiments.

<Experiment 1: Properties tests of a paving material using asphalt emulsion>

Asphalt emulsion was used as a binder emulsion for pavement, and paving materials Nos.1 to 8 were prepared by mixing in a mixer the following materials in the mix proportions (part by weight) as shown in Table 1. Decomposition time, tensile strength, elongation rate at that time, and adhesive strength of paving materials Nos. 1 to 8 were measured. As controls, paving materials comprising epoxy resin in the form of emulsion (Nos. 9 and 10), paving material comprising asphalt emulsion only (No.11), and paving material comprising methacrylate resin (MMA) only (No.12) were prepared and tested in the same way. Mix proportion of an amine compound(s) as a hardener and a non-water soluble epoxy resin as a main agent was so determined that the ratio of epoxy equivalent of a non-water soluble epoxy resin and active hydrogen equivalent of an amine compound(s) as a hardener to be 1:1.

a. Materials used

(1)Asphalt emulsion:

- Modified asphalt emulsion (commercial name "KA-1", produced by Nichireki Co. Ltd.)(concentration of residue by evaporation is 65 wt%)

(2)Non-water soluble epoxy resin:

- Di-glycidyl ether of bisphenol A type (commercial name "RESICON PN-018", produced by Petro Chemicals Co. Ltd.)(solid content 100%, epoxy equivalent 190g/eq)
- DI-glycidyl ether of bisphenol F type (commercial name "RESICON PN-019", produced by Petro Chemicals Co. Ltd.)(solid content 100%, epoxy equivalent 168g/eq)

(3)Amine compounds:

- Polypaminoamido (commercial name "RESICON PH-006", produced by Petro Chemicals Co. Ltd.)(concentration of 40 wt% aqueous solution, active hydrogen equivalent 190g/eq)
- Modified aliphatic polyamine (commercial name "RESICON PH-001", produced by Petro Chemicals Co. Ltd.)(concentration of 77 wt% aqueous solution, active hydrogen equivalent 190g/eq)

(4)Acryl compound:

- Modified acrylate (commercial name "RESICON PN-003", produced by Petro Chemicals Co. Ltd.)(solid content 100%, epoxy equivalent (conversion) 100g/eq)

(5)Methacrylate resin:

- MMA (commercial name "porous mode resin", produced by Ryoko Co. Ltd.)

b. Tests methods

Tests methods are as follows;

(a)Decomposition time:

Each paving material prepared was placed at 20°C, and touched by a finger. The time till no paving material adhere to the finger was measured as decomposition time (minutes).

(b)Tensile strength and elongation rate:

Tensile strength and elongation rate were measured in accordance with "Tensile strength test method for vulcanized rubber" determined in JIS K6251. That is to say, each paving material to be tested was applied on steel plate to form a layer about 2 mm in thickness, and being made decomposed and hardened. After that, a test piece in a form of dumbbell, which is 100 mm in length, 25 mm in width at enlarged parts at both ends and 10 mm in width at center narrow part, was cut out, and kept 4 hours in a thermostat at a temperature of -10°C or 20°C. Then a test piece was set in a tensile test machine and tensioned at a prescribed constant speed with the enlarged parts at both ends held by holding devices of the tensile test machine to be broken. Load and elongation at the time the test piece was broken were measured. Tensile strength was calculated by dividing the maximum tensile load measured at the time the test piece was broken with the sectional area of the test piece. Elongation rate is a ratio of the maximum elongation measured at the time the test piece was broken to the original length of the test piece.

(c)Adhesive test

Adhesive test was conducted in accordance with adhesive strength test method determined in JIS K5400. That is to say, each paving material to be tested was applied on a surface of a steel plate of the size of $70 \times 70 \times 20$ mm to form a layer of about 3 mm in thickness, and a steel jig for pulling up and an about 1 kg weight were placed thereon in this order. After 24 hours later, the weight was removed and the paving material layer around the steel jig was incised in the size of $40 \times 40$ mm to reach the steel plate, and then the steel plate was set in a tensile test machine. Tensile load was applied in perpendicular direction against the steel plate and the maximum tensile load was measured. Tensile adhesive strength A (Mpa) was calculated based on the thus measured maximum tensile load T (N) in accordance with the following equation. The tests were conducted three times in each paving materials to obtain an average tensile adhesive strength. The test were conducted at the temperature of 20°C.

Equation:

$$A(Mpa) = \{T(N)/16(cm^2)\} \times 10^4/10^5$$

The results of the above mentioned tests are shown in Table 1.

Table 1

| | | Paving material No. (parts by weight) | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Asphalt emulsion | | 100 | 100 | 100 | 100 | 100 | 100 | 100 | 100 | 100 | 100 | 100 | - |
| Hardener (Amine Compound) | Polyaminoamido | 13.6 | 8.2 | 23.3 | 14.0 | 36.2 | 21.8 | 23.3 | 14.0 | 23.3 | 14.0 | - | - |
| | Modified Aliphatic Polyamine | 0 | 5.4 | 0 | 9.3 | 0 | 14.4 | 0 | 9.3 | 0 | 9,3 | - | - |
| | Total | 13.6 | 13.6 | 23.3 | 23.3 | 36.2 | 36.2 | 23.3 | 23.3 | 23.3 | 23.3 | - | - |
| Main Agent (Epoxy Resin) | Bisphenol A type* | 9.1 | 9.1 | 15.7 | 15.7 | 24.4 | 24.4 | 11.8 | 11.8 | 15.7 | 15.7 | - | - |
| | Bisplienol F type* | 0 | 0 | 0 | 0 | 0 | 0 | 3.9 | 3.9 | 0 | 0 | - | - |
| | Modified Acrylate | 2.3 | 2.3 | 3.9 | 3.9 | 6.1 | 6.1 | 3.9 | 3.9 | 3.9 | 3.9 | - | - |
| | Total | 11.4 | 11.4 | 19.6 | 19.6 | 30.5 | 30.5 | 19.6 | 19.6 | 19.6 | 19.6 | - | - |
| | Water comprised in Emulsion | 0 | 0 | 0 | 0 | 0 | 0 | 0 | 0 | 13.1 | 13.1 | - | - |
| Resin | MMA | - | - | - | - | - | - | - | - | - | - | - | 100 |
| Parts by weight of Main Agent in solid content against 100 parts by weight of solid content in asphalt emulsion | | 17.5 | 17.5 | 30.2 | 30.2 | 46.9 | 46.9 | 30.2 | 30.2 | 30.2 | 30.2 | - | - |
| Properties | Decom position Time (min., 20°C) | 25.0 | 20.0 | 20.0 | 15.0 | 15.0 | 15.0 | 25.0 | 20.0 | 40.0 | 35.0 | 25.0 | 20.0 |
| | Tensile Strength (Mpa, 20°C) | 1.6 | 2.3 | 2.4 | 4.5 | 3.4 | 9.2 | 1.9 | 4.1 | 1.2 | 2.1 | 0.5 | 26.1 |
| | Elongat Rate (%, 20°C) | 10.3 | 9.6 | 8.8 | 8.2 | 6.3 | 6.4 | 9.6 | 8.8 | 8.5 | 7.9 | 23.1 | 1.7 |
| | Adhesive Strength (Mpa,20°C) | 1.2 | 1.6 | 1.5 | 1.8 | 1.6 | 1.9 | 1.5 | 1.7 | 1.1 | 1.4 | 1.5 | 1.3 |
| Note | | Present Disclosure | | | | | | | | Emulsion Type | | Emulsion Only | MMA |

*: "bisphenol A type" and "bisphenol F type" means"di-glycidyl ether of bisphenol A type" and "di-glycidyl ether of bisphenol F type", respectively.

As shown in Table 1, tested paving materials Nos.1 to 8

all revealed decomposition time of 25 min. or shorter, which are quite short as compared with the decomposition time of 40 min. or 35 min. revealed by the paving materials Nos. 9 and 10 in which the non-water soluble epoxy resin was emulsified and then mixed with the asphalt emulsion. The decomposition times of the paving materials Nos.1 to 8 are same or shorter than the decomposition time of the paving material No. 11 which comprises asphalt emulsion only. These results show that a paving material of the present disclosure quickly decomposes and hardens. Further, in the paving materials of the present disclosure, decomposition time becomes shorter as the amount of epoxy resin mixed increases.

Tensile strength becomes higher as the amount of epoxy resin mixed increases. Tensile strength reached maximum 9.2 Mpa in the case of the paving material No.6, in which epoxy resin is mixed in an amount of 46.9 parts by weight against 100 parts by weight of solid content in the asphalt emulsion. From the comparison between the paving materials which have the same mix proportion of the epoxy resin, it can be understood that higher tensile strength is obtained when polyaminoamido and modified aliphatic polyamine are used together as a hardener, as evident from the comparisons between No.1 and No.2, No.3 and No.4, or No.5 and No.6. The paving material comprising di-glycidyl ether of bisphenol A type showed a little bit higher tensile strength than the paving material comprising di-glycidyl ether of bisphenol A type and di-glycidyl ether of bisphenol F type together, even though mix proportion of epoxy resin are same. The paving materials Nos. 3 and 4 using the non-water soluble epoxy resin reveal higher tensile strength than the paving materials Nos.9 and 10 in which the same epoxy resin was mixed but emulsified, and indicate their superiority in strength.

Adhesive strength showed the same tendencies as tensile strength. Adhesive strength increases as the amount of epoxy resin mixed in a paving material increases. Higher adhesive strength is obtained when polyaminoamido and modified aliphatic polyamine are used together as a hardener. The paving material comprising di-glycidyl ether of bisphenol A type showed higher adhesive strength than the paving material comprising di-glycidyl ether of bisphenol A type and di-glycidyl ether of bisphenol F type together. Adhesive strength shown by the paving materials Nos. 1 to 8 bears comparison with that of conventional methacrylate resin. These results indicate that the paving material of the present disclosure is equal or superior to the conventional methacrylate resin in the adhesiveness to the execution surface and in the strength of holding aggregates.

<Experiment 2:Properties tests of a paving material using petroleum resin type binder emulsion>

Paving materials Nos. 13 to 18 were prepared by mixing, in the same manner as in Experiment 1, the same materials as in Experiment 1 except that petroleum resin type binder emulsion (commercial name "CO-1" produced by Nichireki Co., Ltd.)(concentration of residue by evaporation is 55 wt%) was used as a binder emulsion for pavement in place of asphalt emulsion, in the mix proportions (part by weight) as shown in Table 2. Decomposition time, tensile strength, elongation rate at that time, and adhesive strength of paving materials Nos. 13 to 18 were measured in the same way as in Experiment 1. As in Experiment 1, an amine compound(s) as a hardener and a non-water soluble epoxy resin as a main agent were mixed in the mix proportion that the ratio of epoxy equivalent of a non-water soluble epoxy resin and active hydrogen equivalent of an amine compound(s) as a hardener is 1:1. The results are shown in Table 2. For the purpose of comparison, the results of paving material comprising asphalt emulsion only (No. 11), and paving material comprising methacrylate resin (MMA) only (No. 12) in Experiment 1 are also shown in Table 2.

Table 2

| | | Paving Material No. (parts by wright) | | | | | | | |
|---|---|---|---|---|---|---|---|---|---|
| | | 13 | 14 | 15 | 16 | 17 | 18 | 11 | 12 |
| Petroleum Resin Type Binder Emulsion | | 100 | 100 | 100 | 100 | 100 | 100 | 100 | - |
| Hardener (Amine Compound) | Polyaminoamido | 18.1 | 12.7 | 29.2 | 20.4 | 54.3 | 38.0 | - | - |
| | Modified Aliphatic Polyamine | 0 | 5.4 | 0 | 8.8 | 0 | 16.3 | - | - |
| | Total | 18.1 | 18.1 | 29.2 | 29.2 | 54.3 | 54.3 | - | - |

(continued)

| | | | Paving Material No. (parts by wright) | | | | | | | |
|---|---|---|---|---|---|---|---|---|---|---|
| | | | 13 | 14 | 15 | 16 | 17 | 18 | 11 | 12 |
| Main Agent (Epoxy Resin) | | Bisphenol A type* | 12.2 | 12.2 | 19.7 | 19.7 | 36.6 | 36.6 | - | - |
| | | Bisphenol F type* | 0 | 0 | 0 | 0 | 0 | 0 | - | - |
| | | Modified Acrylate | 3.0 | 3.0 | 4.9 | 4.9 | 9.1 | 9.1 | - | - |
| | | Total | 15.2 | 15.2 | 24.6 | 24.6 | 45.7 | 45.7 | - | - |
| | | Water comprised in Emulsion | 0 | 0 | 0 | 0 | 0 | 0 | - | - |
| Resin | | MMA | - | - | - | - | - | - | - | 100 |
| Parts by weight of Main Agent in solid content against 100 parts by weight of solid content in binder emulsion | | | 27.6 | 27.6 | 44.7 | 44.7 | 83.1 | 83.1 | - | - |
| Properties | | Decom position Time (min., 20°C) | 25.0 | 20.0 | 20.0 | 20.0 | 20.0 | 15.0 | 25.0 | 20.0 |
| | | Tensile Strength (Mpa, 20°C) | 2.5 | 2.9 | 3.1 | 3.6 | 3.5 | 5.5 | 0.5 | 26.1 |
| | | Elongal tion Rate (%, 20°C) | 4.2 | 4.1 | 3.7 | 3.6 | 3.7 | 2.5 | 23.1 | 1.7 |
| | | Adhesi ve Strength (Mpa, 20°C) | 1.1 | 1.1 | 1.2 | 1.2 | 1.2 | 1.8 | 1.5 | 1.3 |
| Note | | | Present Disclosure | | | | | | Emulsion Only | MMA |
| *: "bisphenol A type" and "bisphenol F type" means"di-glycidyl ether ot bisphenol A type" and "di-glycidyl ether of bisphenol F type", respectively. | | | | | | | | | | |

As shown in Table 2, tested paving materials Nos.13 to 18 all revealed decomposition time of 25 min. or shorter, which are same or shorter as compared with the decomposition time of the paving material No. 11 comprising asphalt emulsion only and the paving material (No.12) comprising methacrylate resin (MMA) only. These results indicate that a paving material of the present disclosure quickly decomposes and hardens also in the case that petroleum resin type binder emulsion is used as a binder emulsion for pavement. Further, it is understood that decomposition time becomes shorter as the amount of epoxy resin mixed increases also in the paving material in which petroleum resin type binder emulsion is used as a binder emulsion for pavement.

Tensile strength becomes higher as the amount of epoxy resin mixed increases. Tensile strength reached maximum 5.5 Mpa in the case of the paving material No.18, in which epoxy resin is mixed in an amount of 83.1 parts by weight against 100 parts by weight of solid content in the asphalt emulsion. From the comparison between the paving materials which have the same mix proportion of the epoxy resin, it can be understood that higher tensile strength is obtained when polyaminoamido and modified aliphatic polyamine are used together as a hardener, as evident from the comparisons between No.13 and No.14, No.15 and No.16, or No.17 and No.18. This is similar tendency as in the case asphalt emulsion was used. Adhesive strength showed the same tendencies as tensile strength. Adhesive strength increases as the amount of epoxy resin mixed in a paving material increases. Adhesive strength shown by the paving materials Nos. 13 to 18 bears comparison with that of conventional methacrylate resin of No.12. These results indicate that, also in the case that petroleum resin type binder emulsion is used as a binder emulsion for pavement, the paving material of the present disclosure is equal or superior to the conventional methacrylate resin in the adhesiveness to the execution surface and in the strength of holding aggregates.

<Experiment 3:Stability of an asphalt emulsion containing a hardener>

Using the same materials as in Experiment 1, six sorts of asphalt emulsions containing a hardener Nos. 1A to 6A were prepared by mixing the asphalt emulsion and the hardener only in mix proportion as shown in Table 1. The prepared asphalt emulsions containing a hardener were placed at 20°C and the time to decomposition was measured. Further, another six sorts of asphalt emulsions containing a hardener Nos. 19A to 24A were prepared by mixing the following six sorts of amine compounds with the same asphalt emulsion as in used in Experiment 1, and the time to decomposition were measured as in above. When a lump was produced in the mixture, it was judged that decomposition occurred. The results are shown in Table 3.

a. Amine compounds

- Epoxy modified alicyclic polyamine (commercial name "RESICON PH-009", produced by Petro Chemicals Co., Ltd.) (concentration of 73 wt% aqueous solution, active hydrogen equivalent 190g/eq)
- Mannich modified polyamine (commercial name "RESICON PH-036", produced by Petro Chemicals Co., Ltd.) (concentration of 42 wt% aqueous solution, active hydrogen equivalent 190g/eq)
- Aliphatic polyamine(diethylene triamine) (commercial name "RESICON PH-037", produced by Petro Chemicals Co., Ltd.) (concentration of 11 wt% aqueous solution, active hydrogen equivalent 190g/eq)
- Aromatic polyamine(diaminodiphenylmethane) (commercial name "RESICON PH-038", produced by Petro Chemicals Co., Ltd.) (concentration of 60 wt% aqueous solution, active hydrogen equivalent 190g/eq)
- Alicyclic polyamine (isophorone diamine) (commercial name "RESICON PH-039", produced by Petro Chemicals Co., Ltd.) (concentration of 21 wt% aqueous solution, active hydrogen equivalent 190g/eq)
- Polyoxypropylenediamine (commercial name "RESICON PH-040", produced by Petro Chemicals Co., Ltd.) (concentration of 60 wt% aqueous solution, active hydrogen equivalent 190g/eq)

Table 3

| | | Asphalt Emulsion Containing Hardener No. (parts by weight) | | | | | | | | | | | |
| | | 1A | 2A | 3A | 4A | 5A | 6A | 19A | 20A | 21A | 22A | 23A | 24A |
|---|---|---|---|---|---|---|---|---|---|---|---|---|---|
| Asphalt Emulsion | | 100 | 100 | 100 | 100 | 100 | 100 | 100 | 100 | 100 | 100 | 100 | 100 |
| Hardener (Amine Compound) | Polyaminoamido | 13.6 | 8.2 | 23.3 | 14.0 | 36.2 | 21.8 | - | - | - | - | - | - |
| | Modified Aliphatic Polyamine | - | 5.4 | - | 9.3 | - | 14.4 | - | - | - | - | - | - |
| | Epoxy Modified Alicyclic Polyamine | - | - | - | - | - | - | 23.3 | - | - | - | - | - |
| | Mannich Modified Aliphatic Polyamine | - | - | - | - | - | - | - | 23.3 | - | - | - | - |
| | Aliphatic Polyamine | - | - | - | - | - | - | - | - | 23.3 | - | - | - |
| | Aromatic Polyamine | - | - | - | - | - | - | - | - | - | 23.3 | - | - |
| | Alicyclic Polyamine | - | - | - | - | - | - | - | - | - | - | 23.3 | - |
| | Polyoxypropylene Diamine | - | - | - | - | - | - | - | - | - | - | - | 23.3 |
| | Total | 13.6 | 13.6 | 23.3 | 23.3 | 36.2 | 36.2 | 23.3 | 23.3 | 23.3 | 23.3 | 23.3 | 23.3 |
| Stability (Period of time being preserved without decomposition: weeks, hours) | | $\geqq$ 4w | $\geqq$ 4 w | $\geqq$ 4 w | $\geqq$ 4 w | $\geqq$ 4 w | 2w | $\leqq$ 1 h | $\leqq$ 1 h | $\leqq$ 1 h | $\leqq$ 1 h | $\leqq$ 1 h | $\leqq$ 1 h |

As shown in Table 3, most of the asphalt emulsions containing a hardener Nos.1A to 6A prepared by using polyaminoamido or an amine compound(s) comprising polyaminoamido were stable without decomposition for more than 4 weeks at 20°C. Even the asphalt emulsion containing a hardener No.6, which showed the shortest time to decomposition, was stable for 2 weeks without decomposition. In contrast, the asphalt emulsions containing a hardener Nos.19A to 24A prepared by using amine compounds without polyaminoamido all decomposed within one hour and were quite unstable. These results indicate that, when an amine compound(s) comprising at least polyaminoamido is used as a hardener, it is possible to prepare beforehand an asphalt emulsion containing a hardener by mixing an asphalt emulsion and a hardener in a plant or else and to stock and preserve it. Such an asphalt emulsion containing a hardener, as it is stable for 2 weeks, can be transported to anywhere in Japan and mixed with a non-water soluble epoxy resin at the scene of the execution of work to prepare a paving material of the present disclosure. Further, it is understood that polyaminoamido may be comprised in amine compounds as a hardener at least 50 wt% or more, preferably 60 wt% or more, to obtain stable asphalt emulsion containing a hardener.

<Experiment 4:Stability of a peroleum resin type binder emulsion containing a hardener>

Using the same materials as in Experiment 2, six sorts of petroleum resin type binder emulsions containing a hardener Nos. 13A to 18A were prepared by mixing the petroleum resin type binder emulsion and the hardener only in the mix proportion as shown in the paving materials Nos. 13 to 18 of Table 2. The prepared petroleum resin type binder emulsions containing a hardener were placed at 20°C and the time to decomposition was measured in the same manner as in Experiment 3. The results are shown in Table 4.

Table 4

| | | Binder Emulsion Containing Hardener No. (parts by weight) | | | | | |
|---|---|---|---|---|---|---|---|
| | | 13A | 14A | 15A | 16A | 17A | 18A |
| Peroleum Resin Type Binder Emulsion | | 100 | 100 | 100 | 100 | 100 | 100 |
| Hardener (Amine Compound) | Polyaminoamido | 18.1 | 12.7 | 29.2 | 20.4 | 54.3 | 38.0 |
| | Modified Aliphatic Polyamine | - | 5.4 | - | 8.8 | - | 16.3 |
| | Epoxy Modified Alicyclic Polyamine | - | - | - | - | - | - |
| | Mannich Modified Aliphatic Polyamine | - | - | - | - | - | - |
| | Aliphatic Polyamine | - | - | - | - | - | - |
| | Aromatic Polyamine | - | - | - | - | - | - |
| | Alicyclic Polyamine | - | - | - | - | - | - |
| | Polyoxypropylene Diamine | - | - | - | - | - | - |
| | Total | 18.1 | 18.1 | 29.2 | 29.2 | 54.3 | 54.3 |
| Stability (Period of time being preserved without decomposition: weeks, hours) | | ≧ 4 w | ≧ 4 w | ≧ 4 w | ≧ 4 w | ≧ 4 w | ≧ 4 w |

As shown in Table 4, the petroleum resin type binder emulsions containing a hardener Nos.13A to 18A prepared by using polyaminoamido or amine compounds comprising polyaminoamido were all stable without decomposition for more than 4 weeks at 20°C. These results indicate that, even in the case that a petroleum resin type binder emulsion is used as a binder emulsion for pavement, it is possible to prepare beforehand a petroleum resin type binder emulsion containing a hardener by mixing a petroleum resin type binder emulsion and a hardener in a plant or else and to stock and preserve it, when polyaminoamido or amine compounds comprising polyaminoamido is used as a hardener. This is extremely advantageous property. Further, as in the case of an asphalt emulsion, polyaminoamido may be comprised in amine compounds as a hardener at least 50 wt% or more, preferably 60 wt% or more, to obtain stable asphalt emulsion containing a hardener.

<Experiment 5:Properties tests of paving material using asphalt emulsion as a paved body>

Paved bodies for test Nos. 1T to 12T were constructed by using each of the paving materials Nos. 1 to 8, which are of the present disclosure comprising asphalt emulsion, and Nos.9 to 12, which are control, in Experiment 1. A step of spraying a paving material (sprayed amount: 0.5 kg/m$^2$) on the drainage pavement mixture for test 5 cm in thickness, and a step distributing fine aggregates (grain size of 0.5 to 0.15 mm) thereon were repeated twice to construct a paved body for test having two layers of fine aggregates on the surface. Each paved body for test thus constructed was well cured and then submitted to the following rolling wheel tracking test, twisted test with automobile tire, and skid resistance test. The results are shown in Table 5.

a. Rolling wheel tracking test

Solid tire (200 mm in diameter, 50 mm in width, contact pressure of 628 kPa. rubber hardness of JIS hardness 78 (60°C)) loaded prescribed load was made run to draw circle on the surface of the each paved body for test in a thermostatic room kept at the temperature of 60°C. Displacement downward of the solid tire was gauged, and the time (minutes) till the displacement downward reached 10 mm was measured.

b. twisted test with automobile tire

A tire of a real automobile was placed on the surface of the each paved body for test having cured at 60°C in a thermostatic room, and was steered to turn right in 90 degrees, then to turn left in 180 degrees, and to turn right again in 90 degrees with the tire tread being contacted with the surface of the paved body for test. The weight (g) of aggregates torn off at that time from the paved body for test was measured.

c. Skid resistance test

Skid resistance test was conducted using Dynamic Friction Tester (DF tester). That is to say, coefficient of kinetic friction ($\mu$) was measured by DF tester while spraying water on the surface of the each paved body for test. Line speed of tire rubber piece in the disk of DF tester was set to 40 km/h.

Table 5

| | | Paved Body No. (parts by weight) | | | | | | | | | | | |
|---|---|---|---|---|---|---|---|---|---|---|---|---|---|
| | | 1T | 2T | 3T | 4T | 5T | 6T | 7T | 8T | 9T | 10T | 11T | 12T |
| Asphalt Emulsion | | 100 | 100 | 100 | 100 | 100 | 100 | 100 | 100 | 100 | 100 | 100 | - |
| Hardener (Amine Compound) | Polyaminoamido | 13.6 | 8.2 | 23.3 | 14.0 | 36.2 | 21.8 | 23.3 | 14.0 | 23.3 | 14.0 | - | - |
| | Modified Aliphatic Polyamine . | 0 | 5.4 | 0 | 9.3 | 0 | 14.4 | 0 | 9.3 | 0 | 9.3 | - | - |
| | Total | 13.6 | 13.6 | 23.3 | 23.3 | 36.2 | 36.2 | 23.3 | 23.3 | 23.3 | 23.3 | - | - |
| Main Agent (Epoxy Resin) | Bisphenol A type* | 9.1 | 9.1 | 15.7 | 15.7 | 24.4 | 24.4 | 11.8 | 11.8 | 15.7 | 15.7 | - | - |
| | Bisphenol F type* | 0 | 0 | 0 | 0 | 0 | 0 | 3.9 | 3.9 | 0 | 0 | - | - |
| | Modified Acrylate | 2.3 | 2.3 | 3.9 | 3.9 | 6.1 | 6.1 | 3.9 | 3.9 | 3.9 | 3.9 | - | - |
| | Total | 11.4 | 11.4 | 19.6 | 19.6 | 30.5 . | 30.5 | 19.6 | 19.6 | 19.6 | 19.6 | - | - |
| | Water comprised in Emulsion | 0 | 0 | 0 | 0 | 0 | 0 | 0 | 0 | 13.1 | 13.1 | - | - |
| Resin | MMA | - | - | - | - | - | - | - | - | - | - | - | 100 |
| Parts by weight of Main Agent in solid content against 100 parts by weight of solid content in Asphalt Emulsion | | 17.5 | 17.5 | 30.2 | 30.2 | 46.9 | 46.9 | 30.2 | 30.2 | 30.2 | 30.2 | - | - |
| Results of Tests | Rolling Wheel Tracking Test (min. 60°C) | 590 | 680 | 650 | 710 | 710 | 790 | 640 | 690 | 500 | 580 | 210 | 100 |
| | Twisted Test with Automobile Tire (g, 60°C) | 32 | 22 | 26 | 18 | 22 | 16 | 27 | 20 | 45 | 38 | 70 | 15 |
| | Skid Resistance Test (coefficient of kineticfriction $\mu$ ) | 0.32 | 0.38 | 0.35 | 0.39 | 0.38 | 0.41 | 0.34 | 0.38 | 0.32 | 0.34 | 0.25 | 0.39 |
| Note | | Present Disclosure | | | | | | | | Emulsion Type | | Emulsion Only | MMA |
| *: "bisphenol A type" and "bisphenol F type" means"di- glycidyl ether of bisphenol A type " and "di- glycidyl ether of bisphenol F type ", respectively. | | | | | | | | | | | | | |

EP 1 930 502 B1

As shown in Table 5, the paved bodies Nos.1T to 8T constructed with a paving material of the present disclosure revealed the time till the displacement downward reached 10 mm of 590 min. or more in rolling wheel tracking test, which are good results. The results are much better than those of the paved body No.11T constructed with emulsion only and the paved body No.12T constructed with acrylate resin, both are controls, and are substantially good as compared with the results of the paved bodies Nos.9T and 10T in which emulsified epoxy resin was used.

The same tendencies were also shown in twisted test with automobile tire. The weight of aggregates torn off from the paved bodies Nos. 1 T to 8T is almost same as that from the pave body No. 12T constructed by using acrylate resin as a control, and is quite small as compared with the weight of aggregates torn off from the pave bodies Nos. 9T and 10T in which emulsified epoxy resin was used. The results of rolling wheel tracking test and twisted test with automobile tire indicate that the surface treatment layers constructed with a paving material of the present disclosure are quite strong in torsion resistance, and that a paving material of the present disclosure is suitable for the construction of a pave body strong in torsion resistance.

As to skid resistance, the paved bodied Nos. 1T to 8T constructed with a paving material of the present disclosure revealed high coefficient of kinetic friction almost same as that of the paved body No.12T constructed with acrylate resin as a control, which shows that vehicles can run on the paved body constructed with a paving material of the present disclosure safely without skid.

<Experiment 6: Properties tests of paving material using petroleum resin type binder emulsion as a paved body>

Paved bodies for test Nos. 13T to 18T having two layers of fine aggregates on the surface were constructed in the same manner as in Experiment 5 by using each of the paving materials Nos. 13 to 18 of the present disclosure comprising petroleum resin type binder. Each paved body for test thus constructed was well cured and then submitted as in Experiment 5 to rolling wheel tracking test, twisted test with automobile tire, and skid resistance test, and further to the following torn off numbers test under twisted test with automobile tire. The paved body for control No.12T shown in Experiment 5 was also submitted to torn off numbers test under twisted test with automobile tire. The results are shown in Table 6. The results of rolling wheel tracking test, twisted test with automobile tire, and skid resistance test with respect to the paved body No.12T shown in Table 6 are the same as those shown in Table 5.

d. Torn off numbers test under twisted test with automobile tire

A tire of a real automobile was placed on the surface of the each paved body for test having cured at 60°C in a thermostatic room, and was steered to turn right in 90 degrees, then to turn left in 180 degrees, and to turn right again in 90 degrees with the tire tread being contacted with the surface of the paved body for test. Then the tire was removed from the surface of the paved body for test, the numbers of the areas where surface treatment layer was torn off to expose drainage asphalt mixture under the surface treatment layer.

Table 6

| | | Paved Body No. (parts by weight) | | | | | | |
|---|---|---|---|---|---|---|---|---|
| | | 13T | 14T | 15T | 16T | 17T | 18T | 12T |
| Petroleum Resin Type Binder Emulsion | | 100 | 100 | 100 | 100 | 100 | 100 | - |
| Hardener (Amine Compound) | Polyaminoamido | 18.1 | 12.7 | 29.2 | 20.4 | 54.3 | 38.0 | - |
| | Modified Aliphatic Polyamine | 0 | 5.4 | 0 | 8.8 | 0 | 16.3 | - |
| | Total | 18.1 | 18.1 | 29.2 | 29.2 | 54.3 | 54.3 | - |
| Main Agent (Epoxy Resin) | Bisphenol A type* | 12.2 | 12.2 | 19.7 | 19.7 | 36.6 | 36.6 | - |
| | Bisphenol F type* | 0 | 0 | 0 | 0 | 0 | 0 | - |
| | Modified Acrylate | 3.0 | 3.0 | 4.9 | 4.9 | 9.1 | 9.1 | - |
| | Total | 15.2 | 15.2 | 24.6 | 24.6 | 45.7 | 45.7 | - |
| | Water comprised in Emulsion | 0 | 0 | 0 | 0 | 0 | 0 | - |
| Resin | MMA | - | - | - | - | - | - | 100 |

(continued)

|  | | Paved Body No. (parts by weight) | | | | | | |
|---|---|---|---|---|---|---|---|---|
|  | | 13T | 14T | 15T | 16T | 17T | 18T | 12T |
| Parts by weight of Main Agent in solid content against 100 parts by weight of solid content in Petroleum Resin Type Binder Emulsion | | 27.6 | 27.6 | 44.7 | 44.7 | 83.1 | 83.1 | - |
| Results of Tests | Rolling Wheel Tracking Test (min. 60°C) | 620 | 710 | 720 | 800 | 830 | 850 | 100 |
|  | Twisted Test with Automobile Tire (g, 60°C) | 29 | 15 | 25 | 11 | 11 | 8 | 15 |
|  | Skid Resistance Test (coefficient of kinetic friction $\mu$) | 0.34 | 0.35 | 0.35 | 0.36 | 0.38 | 0.39 | 0.39 |
|  | Torn Off Numbers Test under Twisted Test with Automobile Tire (Nos. 50°C) | 156 | 57 | 85 | 18 | 20 | 0 | 80 |
| Note | | Present Disclosure | | | | | | MMA |
| *: "bisphenol A type" and "bisphenol F type" means"di-glycidyl ether of bisphenol A type" and "di-glycidyl ether of bisphenol F type", respectively. | | | | | | | | |

As shown in Table 6, the paved bodies Nos.13T to 18T of the present disclosure constructed with a petroleum resin type binder emulsion as a binder emulsion for pavemennt revealed the time till the displacement downward reached 10 mm of 620 min. or more in rolling whell tracking test, which are good results. The results are much better than that of the paved body for control No. 12T constructed with acrylate resin, and indicate that the paved body constructed with a paving material of the present disclosure is superior in wearing resistance. In twisted test with automobile tire, the amount of aggregates torn off from the paved bodies Nos. 13T to 18T constructed with the paving material of the present disclosure were, while depending on the amount of epoxy resin mixed, almost same as that from the paved body for control No. 12T, and were by no means inferior.

As to skid resistance, the paved bodied Nos. 13T to 18T constructed with a paving material of the present disclosure revealed high coefficient of kinetic friction almost same as that of the paved body for control No.12T constructed with acrylate resin, which shows that vehicles can run on the paved body constructed with a paving material of the present disclosure safely without skid.

Further in torn off numbers test under twisted test with automobile tire, the numbers of the torn off areas decreased as the amount of epoxy resin mixed increased, and tended to be smaller in the case that modified aliphatic polyamine was used together than in the case that polyaminoamido was used alone as a hardener. When polyaminoamido was used alone as a hardener, the paved bodies Nos. 15 and 17T, which comprise epoxy resin as a main agent in an amount of 44.7 parts by weight or more as solid content against 100 parts by weight of solid content of petroleum resin type binder emulsion, revealed the numbers of torn off areas almost same as or much smaller than those in the paved body for control No. 12T constructed with acrylate resin. The paved bodies Nos. 14T, 16T and 18T in which modified aliphatic polyamine was used together revealed the numbers of torn off areas substantially smaller than those in the paved body for control No. 12T constructed with acrylate resin. In particular, the paved body No. 18T showed no torn off area.

The results of rolling wheel tracking test, twisted test with automobile tire, and torn off numbers test under twisted test with automobile tire indicate that the surface treatment layers constructed with a paving material of the present disclosure are quite strong in torsion resistance also in the case that petroleum resin type binder emulsion is used as a binder emulsion for pavement, and that a paving material of the present invention is suitable for the construction of a pave body strong in torsion resistance.

<Experiment 7: Heat screening ability test>

Heat screening ability of heat screening pigment ("Heat screening pigment for Thermotech W"), produced by Nichireki Co., Ltd.) and hollow particles ("Hollow particles for Thermotech W", produced by Nichireki Co., Ltd.) were tested by mixing them into a paving material having the same mix proportion as in the paving material No.16 prepared in Experiment 2, and a paving material comprising methacrylate resin (MMA) only as in No.12 used in Experiment 1. Heat screening ability test was conducted in accordance with "Method for indoor radiation test for heat screening pavement (Provisional Edition)" recited in "PAVEMENT", vol.40, No.3, Kabushiki Kaisha Kensetsu Tosho, March 1, 2005, pp.17-19.

Test temperature was 30°C.

Three specimens (30 cm×30 cm×5 cm) for wheel tracking test of drainage pavement mixture were produced. A thermocouple was attached at the prescribed position of the surface of each specimen. Heat screening pigment and hollow particles were mixed with the paving material having the same mix proportion as in the paving material No.16 as shown in Table 2, or the paving material comprising methacrylate resin (MMA) only as in No.12 in Table 1 in mix proportion as shown in Table 7 to prepare paving materials Nos. 16S and 12S for heat screening ability test. Each of the paving materials Nos. 16S and 12S was applied on the surface of the specimen on which the thermocouple was attached in an amount of 0.5 kg/m$^2$ to fully cover the thermocouple. Then specimens were cured for 5 hours at 30°C. As a control, a specimen with no paving material applied was similarly cured 5 hours at 30°C.

After curing, an incandescent lamp was positioned at 50 cm straight above of the control specimen with no paving material applied, and was turn on to radiate the specimen. The time needed for the temperature indicated by the thermocouple attached on the specimen to increase up to 60°C was measured. The specimens applied with the paving materials for heat screening ability test Nos.16S or 12S were radiated by the incandescent lamp under the same condition as in the control specimen for the same period of time as that was needed for the temperature of the control specimen to increase up to 60°C, and the temperature indicated by the thermocouple attached to the specimens was measured as indicator of heat screening ability. The results are shown in Table 7.

Table 7

| | | Paving Material No. (parts by weight) | | |
| --- | --- | --- | --- | --- |
| | | 16S | 12S | Control |
| Petroleum Resin Type Binder Emulsion | | 100 | - | |
| Hardener (Amine Compound) | Polyaminoamido | 20.4 | | |
| | Modified Aliphatic Polyamine | 8.8 | - | |
| | Total | 29.2 | | |
| Main Agent (Epoxy Resin) | Bisphenol A type* | 19.7 | - | |
| | Bisphenol F type* | 0 | - | |
| | Modified Acrylate | 4.9 | | |
| | Total | 24.6 | - | |
| | Water comprised in Emulsion | 0 | - | |
| Resin | MMA | - | 100 | |
| Heat Screening Pigment for Thermotech W Hollow particles for Thermotech W | | 3.1 (3.3)** 10.5 (11.1)** | 3.3 11.1 | - - |
| Parts by weight of Main Agent solid content against 100 parts by weight of solid content in Petroleum Resin Type Binder Emulsion | | 44.7 | - | - |
| Results of Tests | Temperature (°C) | 48.8 | 48.5 | 60 |
| | Difference from Control (°C) | 11.2 | 11.5 | 0 |
| Note | | Present Disclosure | MMA | Control |
| *: "bisphenol A type" "bisphenol F type" means"di-giycidyl ether of bisphenol A type" and "di-glycidyl ether of bisphenol F type", respectively. ||||
| **: The numerical value in parenthesis indicates mix proportion against 100 parts by weight of solid content contained in a paving material (petroleum resin type binder emulsion+ hardener+main agent). ||||

As shown in Table 7, under the condition in which the temperature of the control specimen without heat screening pavement increases up to 60 °C, the temperature of the paving materials of the present disclosure mixed with heat screening pigment and hollow particles increased only up to 48.8°C, which is almost same heat screening ability as that was revealed by the conventional paving material comprising methacrylate resin (MMA) only added with heat screening pigment and hollow particles. From the results, it was confirmed that a paving material of the present disclosure is useful and advantageous as a paving material for a heat screening pavement when heat screening pigments and/or hollow particles are added.

As explained above, a paving material of the present disclosure not only reveals superior tensile strength and adhesive strength as itself, but also shows high torsion resistance and high skid resistance when used in a paved body constructed therewith. A paving material of the present disclosure is quite useful and advantageous material for pavement with which a paved body superior in wearing resistance and durability can be constructed. In addition, a paving material of the present disclosure has an advantage that the paved body constructed therewith can be opened to the traffic use earlier because its decomposition time is short. Furthermore, a paving material of the present disclosure is useful as a paving material for heat screening pavement, when heat screening pigment and/or hollow particles are mixed.

Industrial Applicability

As explained above, a paving material of the present disclosure decomposes fast and is superior in tensile strength, elongation rate, an adhesive strength. Therefore, a paved body which is superior in skid resistance and durability as well as in torsion resistance can be constructed with a paving material of the present disclosure. Further, since a paving material of the present disclosure is safe and easy to be handled, generates irritant smell very little, has less restrictions on the conditions of execution of work, cracks on the surface of pavement can be sealed easily, a stress releasing layer and other various paved layers as well as a surface treatment layer which refreshes and elongates the life time of a paved body can be easily constructed with a paving material of the present disclosure. Furthermore, a paving material of the present disclosure is useful as a paving material for heat screening pavement, when heat screening pigment and/or hollow particles are mixed. The present disclosure contributes not only to improve road traffic circumstances, but also to prevent heat island phenomenon in summer time, and has very useful industrial applicability.

**Claims**

1. A process for producing a paving material, which comprises steps of;

    (i) preparing a binder emulsion for pavement containing polyaminoamido as a hardener of epoxy resin beforehand by mixing a binder emulsion for pavement and polyaminoamido, and
    (ii) mixing the binder emulsion for pavement containing polyaminoamido and a non-water soluble epoxy resin selected from the group consisting of a di-glycidyl ether of bisphenol A type, di-glycidyl ether of bisphenol F type and the mixture thereof, wherein said non-water soluble epoxy resin is not in emulsion form and wherein step (ii) is carried out at the time of execution of work, wherein work is constructing a paved body.

2. The process for producing a paving material according to claim 1, in the step of preparing a binder emulsion for pavement containing polyaminoamido, aliphatic modified polyamine other than polyaminoamido is further mixed with the binder emulsion for pavement in addition to polyaminoamido.

3. The process for producing a paving material according to claim 1 or 2, said binder emulsion for pavement is an asphalt emulsion or a petroleum resin type binder emulsion.

4. The process for producing a paving material according to claim 3, which uses the non-water soluble epoxy resin in an amount of 10 to 70 parts by weight against 100 parts by weight of solid content contained in the asphalt emulsion, or the non-water soluble epoxy resin in an amount of 10 to 100 parts by weight against 100 parts by weight of solid content contained in the petroleum resin type binder emulsion.

5. The process for producing a paving material according to any one of claims 1 to 4, which further comprises a step of mixing cement, pigment, heat screening pigment, and/or hollow particles in the paving material.

6. A method for construction of paved body having a paved layer containing binder for pavement and hardened epoxy resin, which comprises steps of spraying or applying the paving material produced by the process according to any one of claims 1 to 5 on an execution surface, and forming a paved layer containing binder for pavement and hardened epoxy resin on the execution surface.

7. A method for construction of paved body according to claim 6, which further comprises a step of distributing aggregates, and the step of spraying or applying the paving material produced by the process according to any one of claims 1 to 5 on an execution surface and the step of distributing aggregates are carried out, whichever first, one or more times, with the same or different number of times.

8. A method for construction of paved body having a paved layer containing binder for pavement, hardened epoxy resin and aggregates, which comprising steps of mixing aggregates in the paving material produced by the process according to any one of claims 1 to 5, and spreading out the mixture on the execution surface.

**Patentansprüche**

1. Verfahren zum Herstellen eines Pflastermaterials, das die folgenden Schritte beinhaltet:

(i) Zubereiten einer Binderemulsion für Pflaster, die Polyaminoamid als Härter von Epoxidharz enthält, im Voraus durch Mischen einer Binderemulsion für Pflaster und Polyaminoamid, und
(ii) Mischen der Binderemulsion für Pflaster, die Polyaminoamid enthält, und einem nicht wasserlöslichen Epoxidharz ausgewählt aus der Gruppe bestehend aus einem Diglycidylether von Bisphenol Typ A, Diglycidylether von Bisphenol Typ F und der Mischung davon, wobei das nicht wasserlösliche Epoxidharz nicht in Emulsionsform vorliegt und wobei Schritt (ii) zum Zeitpunkt der Ausführung der Arbeit durchgeführt wird, wobei die Arbeit das Konstruieren einer Pflasterung ist.

2. Verfahren zum Herstellen eines Pflastermaterials gemäß Anspruch 1, wobei im Schritt des Zubereitens einer Binderemulsion für Pflaster, die Polyaminoamid enthält, aliphatisches modifiziertes Polyamin, das kein Polyaminoamid ist, weiterhin mit der Binderemulsion für Pflaster zusätzlich zum Polyaminoamid gemischt wird.

3. Verfahren zum Herstellen eines Pflastermaterials gemäß Anspruch 1 oder 2, wobei die Binderemulsion für Pflaster eine Asphaltemulsion oder eine petroleumharzartige Binderemulsion ist.

4. Verfahren zum Herstellen eines Pflastermaterials gemäß Anspruch 3, bei dem das nicht wasserlösliche Epoxidharz in einer Menge von 10 bis 70 Gewichtsteilen gegenüber 100 Gewichtsteilen von in der Asphaltemulsion enthaltenem Feststoffanteil oder das nicht wasserlösliche Epoxidharz in einer Menge von 10 bis 100 Gewichtsteilen gegenüber 100 Gewichtsteilen von in der petroleumharzartigen Binderemulsion enthaltenem Feststoffanteil verwendet wird.

5. Verfahren zum Herstellen eines Pflastermaterials gemäß einem der Ansprüche 1 bis 4, das weiterhin einen Schritt des Mischens von Zement, Pigment, Hitzeschildpigment und/oder hohlen Partikeln im Pflastermaterial beinhaltet.

6. Verfahren zum Konstruieren von Pflasterung, die eine Pflasterschicht aufweist, die einen Binder für Pflaster und ein gehärtetes Epoxidharz enthält, das Schritte des Sprühens oder Auftragens des durch den Prozess gemäß einem der Ansprüche 1 bis 5 produzierten Pflastermaterials auf einer Ausführungsoberfläche und Bildens einer Pflasterschicht, die einen Binder für Pflaster und ein gehärtetes Epoxidharz enthält, auf der Ausführungsoberfläche beinhaltet.

7. Verfahren zum Konstruieren von Pflasterung gemäß Anspruch 6, das ferner einen Schritt des Verteilens von Aggregaten beinhaltet und wobei der Schritt des Sprühens oder Auftragens des durch den Prozess gemäß einem der Ansprüche 1 bis 5 produzierten Pflastermaterials auf einer Ausführungsoberfläche und der Schritt des Verteilens von Aggregaten, gleich welcher zuerst, ein oder mehrere Male mit der gleichen oder unterschiedlichen Anzahl von Malen durchgeführt werden.

8. Verfahren zum Konstruieren von Pflasterung, die eine Pflasterschicht aufweist, die einen Binder für Pflaster, ein gehärtetes Epoxidharz und Aggregate enthält, das Schritte des Mischens von Aggregaten im durch den Prozess gemäß einem der Ansprüche 1 bis 5 produzierten Pflastermaterial und Ausbreiten der Mischung auf der Ausführungsoberfläche beinhaltet.

**Revendications**

1. Procédé de fabrication d'un revêtement routier qui comprend les étapes consistant à :

(i) préparer au préalable une émulsion de liant pour revêtement routier contenant du polyaminoamido en tant que durcisseur fait de résine époxy en mélangeant une émulsion de liant pour revêtement routier et du polyaminoamido, et

(ii) mélanger l'émulsion de liant pour revêtement routier contenant le polyaminoamido et une résine époxy non soluble dans l'eau sélectionnée dans le groupe constitué d'un éther di-glycidylique de type bisphénol A, d'un éther di-glycidylique de type bisphénol F et d'un mélange de ceux-ci, dans lequel ladite résine époxy non soluble dans l'eau ne se présente pas sous forme d'émulsion et dans lequel l'étape (ii) est réalisée au moment de l'exécution du travail, le travail consistant en la construction d'un corps revêtu.

2. Procédé de fabrication d'un matériau de revêtement routier selon la revendication 1, où à l'étape de préparation une émulsion de liant pour revêtement routier contenant du polyaminoamido, la polyamine aliphatique modifiée à part le polyaminoamido est en outre mélangée avec l'émulsion de liant pour revêtement routier en plus du polyaminoamido.

3. Procédé de fabrication d'un matériau de revêtement routier selon la revendication 1 ou la revendication 2, ladite émulsion de liant pour revêtement routier étant une émulsion d'asphalte ou une émulsion de liant de type résine de pétrole.

4. Procédé de fabrication d'un matériau de revêtement routier selon la revendication 3, qui a recours à la résine époxy non soluble dans l'eau en une quantité de 10 à 70 parties en poids par rapport à 100 parties en poids de contenu solide contenu dans l'émulsion d'asphalte, ou à la résine époxy non soluble dans l'eau en une quantité de 10 à 100 parties en poids par rapport à 100 parties en poids de contenu solide contenu dans l'émulsion de liant de type résine de pétrole.

5. Procédé de fabrication d'un matériau de revêtement routier selon l'une quelconque des revendications 1 à 4, qui comprend en outre une étape de mélange de ciment, de pigment, de pigment de protection contre la chaleur et/ou de particules creuses dans le matériau de revêtement routier.

6. Procédé de construction d'un corps revêtu ayant une couche revêtue contenant un liant pour revêtement routier et de la résine époxy durcie, qui comprend les étapes de pulvérisation ou d'application du matériau de revêtement routier produit par le procédé selon l'une quelconque des revendications 1 à 5 sur une surface d'exécution, et de formation d'une couche revêtue contenant du liant pour revêtement routier et de la résine époxy durcie sur la surface d'exécution.

7. Procédé de construction d'un corps revêtu selon la revendication 6, qui comprend en outre une étape de distribution d'agrégats, et l'étape de pulvérisation ou d'application du matériau de revêtement routier produit par le procédé selon l'une quelconque des revendications 1 à 5 sur une surface d'exécution et l'étape de distribution d'agrégats sont réalisées, selon l'éventualité qui se produit en premier, une ou plusieurs fois, le même nombre de fois ou un nombre de fois différent.

8. Procédé de construction d'un corps revêtu ayant une couche revêtue contenant un liant pour revêtement routier, une résine époxy durcie et des agrégats, qui comprend les étapes de mélange des agrégats dans le matériau de revêtement produit par le procédé selon l'une quelconque des revendications 1 à 5 et d'étalement du mélange sur la surface d'exécution.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2913904 B
- JP 3246460 B
- JP 11323140 A
- JP 2001131388 A

**Non-patent literature cited in the description**

- Method for indoor radiation test for heat screening pavement (Provisional Edition). PAVEMENT. Kabushiki Kaisha Kensetsu Tosho, 01 March 2005, vol. 40, 17-19